# EUROPEAN PATENT SPECIFICATION

(11) **EP 3 515 573 B1**
(45) Date of publication and mention of the grant of the patent: **23.09.2020**
(21) Application number: 17716321.9
(22) Date of filing: 16.02.2017
(51) Int. Cl.: B01D 17/02, C02F 1/40

(54) **HYDROCARBON-WATER SEPARATOR**
KOHLENWASSERSTOFF-WASSER-SEPARATOR
SÉPARATEUR EAU-HYDROCARBURES

(30) Priority: 23.03.2016 NO 20160495; 06.05.2016 NO 20160769
(43) Date of publication of application: 31.07.2019
(73) Proprietor: Stauper Offshore AS, 3211 Sandefjord (NO)
(72) Inventor: FOLKVANG, Jørn, 3961 Stathelle (NO)
(74) Representative: Protector IP AS
(86) International application number: PCT/NO2017/000005
(87) International publication number: WO 2017/164747

(56) References cited:
- US-A- 2 037 426
- US-A- 4 369 047
- US-A- 4 371 382
- US-A- 5 262 046
- US-A1- 2010 187 186

## Description

### BACKGROUND

### Field of the invention

The present invention concerns an apparatus for separating hydrocarbons and water, in particular of the kind using a process gas for lifting oil out of the water phase from produced water associated with oil and gas production or extraction of oil from oil contaminated water.

Further, it is a recognized fact that environmental conditions are governed by regulatory bodies demanding cleaning efficiency of 100 % in certain vulnerable locations resulting in ever increasing challenges on the operators. The present invention accounts for such requirements.

### Prior and related art

Separating hydrocarbons, i.e. oil and/or gas, and water is required in several applications. One typical example is separating oil from bilge water aboard a ship. Another example is separating oil and/or natural gas from well fluid produced at an offshore oil or gas field. In both examples, the input fluid typically has a high content of water. Further, the rate of input fluid may be large, and the space available for a separator tank aboard a ship or in an offshore platform may be limited and costly.

Hydro-cyclones and other fast liquid-liquid separators are known in the art, and are not further discussed herein. The invention concerns a separator for an input process fluid containing mainly oil-contaminated water for example from hydro-cyclones.

Separators of the kind described herein use a process gas, e.g. N₂ or CO₂, to form bubbles. Oil in the input fluid attaches to the bubbles, and rises to the surface, whereas the water sinks. Gaseous hydrocarbons also form bubbles and are removed from the top of the separator tank together with process gas and oil. As the amount of dissolved gas in a liquid is proportional to the pressure above the liquid, the pressure in the output liquid is typically equal to ambient pressure to ensure that the gas is released within the separator tank. The pressure at the inlet may be reduced in one or more stages, and may involve pressures below atmospheric pressure to enhance bubble formation and degassing.

WO 02/41965 discloses a separator tank wherein a vortex is set up within a vertical, cylindrical tank to enhance separation. More particularly, tank has a helical guide on its inner surface to create a rotational flow. The rotational flow forces the lighter component, such as oil and gas droplets, towards an inner concentric cylindrical wall where they coalesce and rise to the surface of the liquid, whereas the heavier components move radially outward and downward. Water is discharged through a water outlet in the lower part of the tank.

EP 1 779 911 A1, EP 2 263 768 A1 and EP 2 442 881 B1 describe different varieties of a vertical cylindrical tank in which separation is enhanced by setting up at least one vortex. These varieties have a vortex breaker in the form of a disc near the water outlet in the lower part of the tank. The efficiency obtained by these known methods is not satisfactory.

WO9965588 Aldescribes a separator tank for removing water from oil, in which process gas is added to the oil before the mixture is introduced at the bottom of a first section. Pressures are adjusted such that the gas forms bubbles rising through the fluid. The gas in the bubbles is rapidly heated by the ambient oil, so that its relative humidity decreases and water vapour is pulled from the oil. The gas and water vapour is withdrawn from the top of the container, while the oil is removed from the bottom of a second section. The first and second sections of the container are separated by a partition wall, preferably in the form of a tube. The efficiency is still not satisfactory and further needed is artificial preheating of the fluid and packing devices for obtaining maximum surface area.

WO2010080035 and WO2013109345A1 provide examples of a vertical, cylindrical separator tank in which a gas, e.g. N₂, is added to the input fluid, and the mixture is entered into the tank through a central pipe within the tank. The central pipe comprises branches and tangentially oriented nozzles to set up a vortex. An outlet for hydrocarbons at the top, a helical guide on its inner surface, a vortex breaker and an outlet for clean water at the bottom are also provided. Guide plates are needed and there are no devices installed for arresting or reducing the swirling fluid action or unwanted fluid oscillation in the location where hydrocarbons and gas are leaving the water phase. This greatly reduces the efficiency at each stage.

EP 2 263 767 A1 describes a separator tank for separating oil and gas from water comprising a cylindrical vertical tank and inner conical segments where the mixture of liquid and gas are forced into a swirling upward motion along the outer conical walls and into the adjacent area at the cone top outlet. The separator does not provide adequate control of liquid flow in the hydrocarbon gas release zone, and the efficiency not satisfactory.

EP 1 779 911 A1 discloses a separator tank, and the inventor is the same as for present application. The separator tank of EP 1 779 911 A1 is compatible to the above EP 2 263 767 A1 containing a single conical frustum and the separator tank may be couple to one or more similar separator tanks for improving of the overall efficiency. The separator does not provide adequate control of liquid flow in the hydrocarbon gas release zone, and the efficiency not satisfactory. Another separator is disclosed in US4369047.

The separators above may comprise several tank segments or stages, such that the water output from one stage is the fluid input to the next stage below. Two to four stages are common, and each stage typically requires process gas. The pressure may be equal in all stages. However, it may be desirable to limit the pressure drop in each stage or tank segment to achieve a relatively slow flow within the segment, thereby increasing the amount of oil adhering to the bubbles within the segment, and hence the efficiency of the segment. A limited pressure drop at each stage may require additional stages to arrive at the desired output pressure. Further, marginal control of the liquid motion in the oil -water - gas separation zone may further reduce the efficiency by preventing optimum release of oil and gas which may require additional stages for approved cleaning. Gas - liquid mixers may also constitute a significant part in enhancing the overall efficiency of the process.

A general objective of the present invention is to solve at least one of the problems above while retaining the benefits of prior art. More particularly, objectives of the present invention include improving the efficacy and separation rate in a prior art separator, reduce the amount of process gas required, other factors having impact on cost of operation and combining the invention with bio-remediation designated limited space for offshore operations in vulnerable areas whenever overboard flow of clean water is required.

### SUMMARY OF THE INVENTION

This is achieved by an apparatus for separating hydrocarbons from water according to claim 1.

The apparatus is in one embodiment further comprising a subsequent tank segment, wherein a fluid inlet pipe of the second tank segment is connected to the downward flowing water outlet of the previous tank segment, through a vortex plated exit connected to pipe, and into a truncated conical wall segment located inside the lower tank segment, and wherein the pipe is subjected to additional gas through a gas inlet pipe, and pipe is lead to a pipe spread analogous as in tank segment, and where the second tank segment comprises a hydrocarbon outlet at the upper part and a water outlet at the bottom at a tank cap.

The apparatus according to the invention does not require guide plates are at the fluid inlets in order to set the fluid into an upward rotating motion in the conical shaped tank segments.

### BRIEF DESCRIPTION OF THE DRAWINGS

The invention will be illustrated in greater detail below be means of an exemplary embodiment with reference to the accompanying drawings, in which:
- Figure 1: illustrates an embodiment of the invention with two conical tank segments,
- Figures 2-4: illustrate alternative fluid control devices of the separator,
- Figure 5: illustrates syphoning pipe spread extending at varying diameters from a centre mounted ejector pipe,
- Figure 6: illustrates an embodiment of the invention with one conical tank segment having double input ports,
- Figure 7A: is a cross section along the plane B - B in Fig.1 illustrating a typical pipe spread,
- Figure 7B: is a cross section along the plane A - A in Fig.6 illustrating a typical pipe spread in a single stage process,
- Figure 8: illustrates an embodiment of the invention with two or more conical tank segments with inclined plated bottoms protruding radially downwards,
- Fig. 9: illustrates a gas - fluid mixer with particular reference to plane C - C in Fig.1,
- Fig. 10: illustrates the principal of known technology such as bio-remediation, adding a steady stream of oxygen to the fluid flowing into a separate tank segment connected in series with the previous described cleaning device.

### DETAILED DESCRIPTION

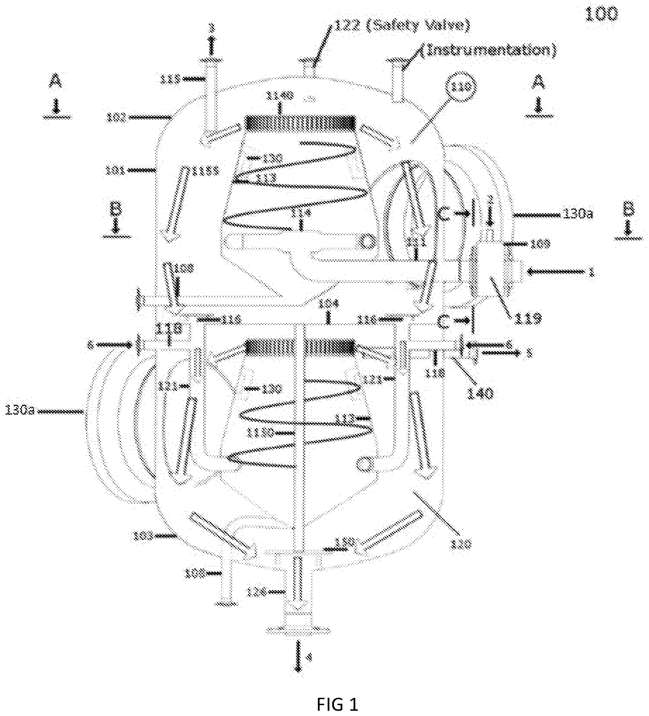

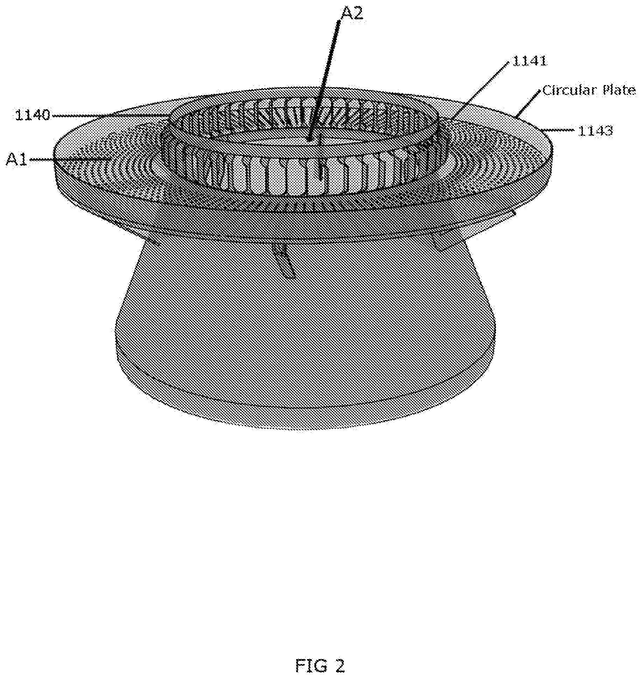

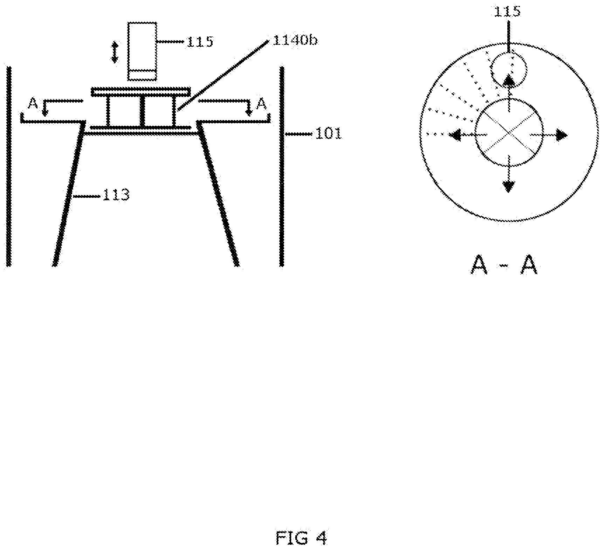

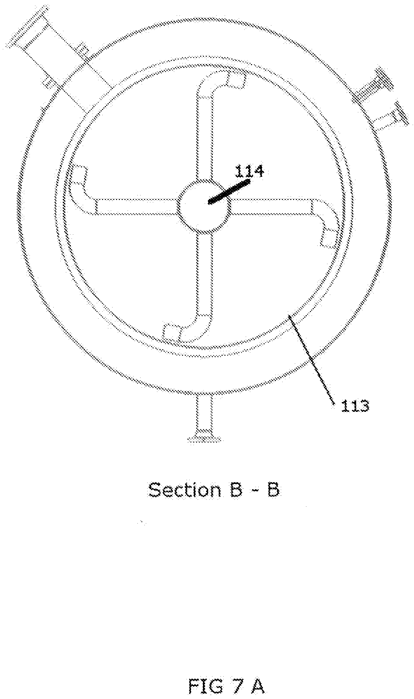

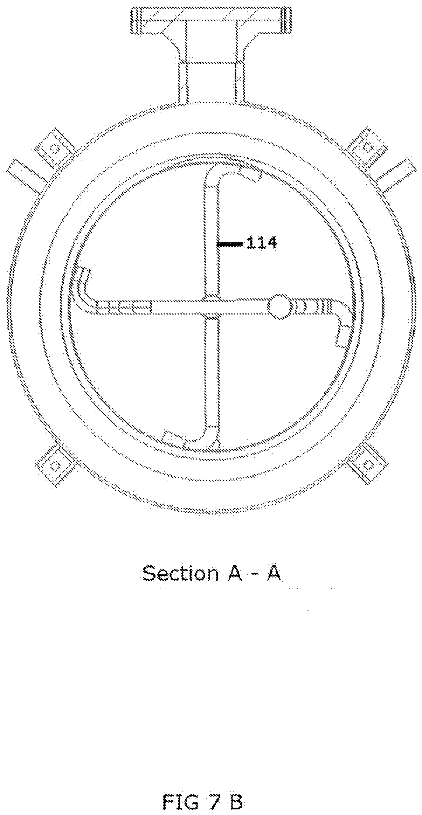

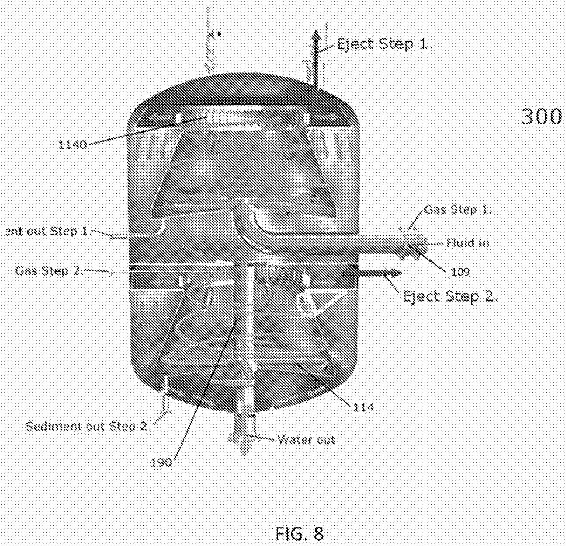

The invention concerns an apparatus for separating hydrocarbons from water, comprising a tank segment 110 with a fluid inlet 1 through a cylindrical tank wall and further through the wall of an inner conical tank segment above a bowl, with a hydrocarbon and process gas outlet at a top end 3 and a water outlet from the outer tank at the bottom 4. The inlet pipe 111 protruding into two or more pipes, i.e. pipe spread 114 as illustrated in Fig. 1. The pipe spread 114 is also illustrated by Fig. 7 A and Fig.7 B, with open ends mounted tangentially and close to the inner wall of the conical tank segment thereby forcing the inlet flow into a rotating upward motion along the inner conical wall 113 towards various alternatives of flow control devices i.e. guide vanes 1140 in Fig.1. Alternatives of flow control devices are also illustrated in Fig.2, Fig.3, Fig.4 and Fig.5 designated prevention of unwanted fluid motion in the location above the truncated conical shaped tank segment, where the gas bubbles carrying oil films are extracted into the ejection pipe 115. The ejection pipe is offset from the vertical centre line when the truncated conical shaped tank segment protrudes into vertically mounted plates forming two or more open-sided channels as illustrated by Fig.4, Section A - A. However, when guide vanes 1140 are being used at the exit of the truncated conical shaped tank segment as illustrated by Fig.1 and Fig.8, the ejector pipe 115 may be placed along the centre line of the truncated conical shaped tank segment or preferably offset from the centre line.

Fig. 1 illustrates an embodiment of the invention with two conical tank segments. Baffle plates 130 are attached to the upper cone 113 wall adjacent to the truncated conical shaped tank segment thereby reducing the rotation speed of the fluid prior to entering upward and horizontal laminar flow above the flow control devices as described above.

A fluid control device is illustrated in Fig.2, in the form of a perforated plate in the zone between the guide vanes 1140 and the tank wall 101, 102. The guide vanes 1140 and the perforated plate extending from the base of the guide vanes to the tank wall 102 or to a circular vertical plate securing optimum enhanced efficiency when the tank diameter is unfavourably large; f.ex.2:1 to that of the truncated conical shaped tank segment.

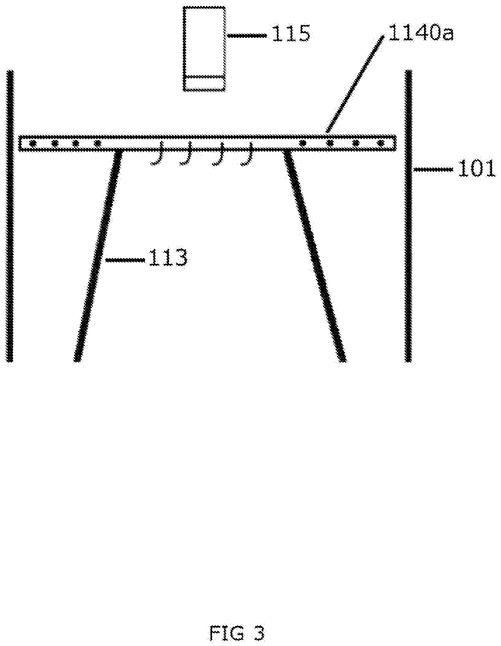

Fig.3 illustrates a truncated conical shaped tank segment covered by a perforated plate with material pierced and punched into downward loops for reducing the rotation of the fluid or in some cases plain perforated holes may be satisfactory covering the truncated conical shaped tank segment and the area extending to the tank wall 101 or tank cap 102. For enhanced efficiency one or more perforated plates may be placed in parallel with the truncated conical shaped tank segment (frustum) mounted plate, all extending to the inner tank wall. When perforated plates are being used, the ejection pipe 115 is preferably placed along the centre line of the tank 110.

Fig.4 illustrates an alternative fluid control through the truncated conical shaped tank segment by means of open-sided channels formed by vertical plates and a perforated plate between the truncated conical shaped tank segment and the tank wall 101, 102 and an offset ejection pipe. The truncated conical shaped tank segment protruding into vertical plates forming two or more open-sided vertical channels as previously described. In this configuration the ejection pipe 115 is offset from the centre line of the tank 110.

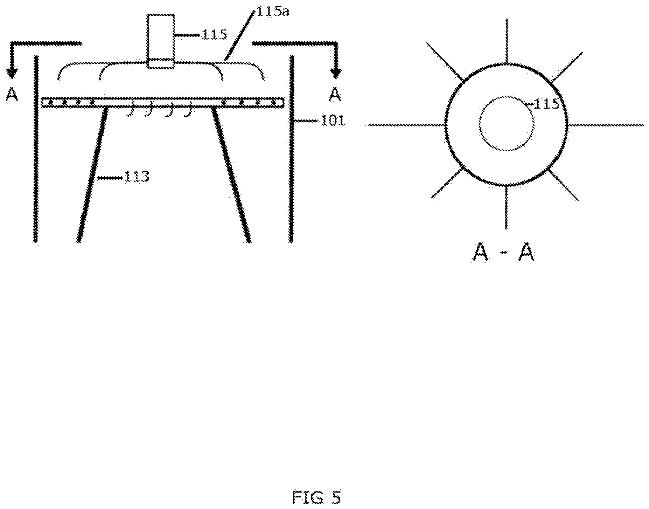

Fig 5 illustrates one or more syphoning pipe spread extending horizontally at varying diameters towards the tank wall cap 101, 102 from the ejector pipe 115 placed along the centre line of the tank 110 for enhanced efficiency at large tank diameters and process capacities. The hydrocarbon outlet 115 ejection pipe mouth protrudes into several ejection pipes 115a of different lengths thereby catching released oil and gas before the downward flow through the perforated plate occurs.

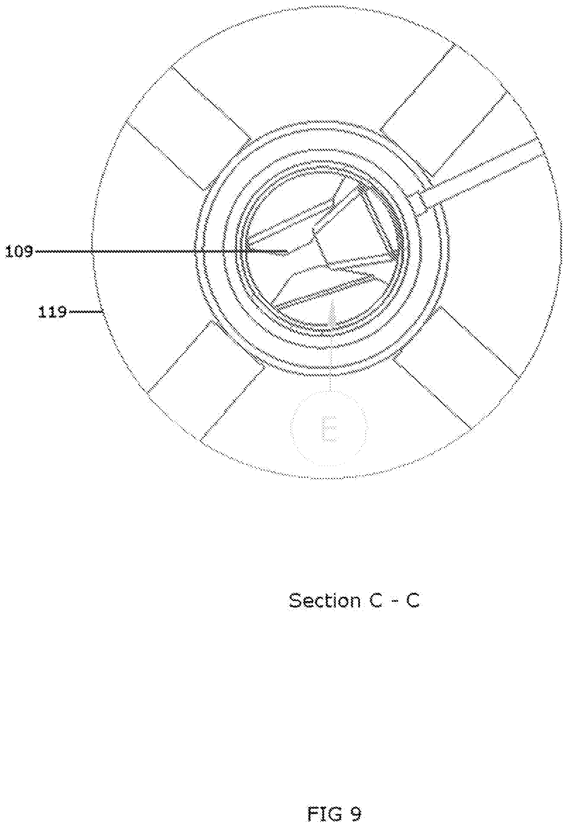

In operation, an initial fluid contains dissolved gas, including process gas supplied upstream from the inlet 2. The mixing of gas and fluid is performed by a designated gas-fluid mixer 109 as illustrated in Fig. 1, enhancing the overall efficiency. The gas fluid mixer 109 mounted in a housing 119 is illustrated in Fig.9. The tangentially mounted pipe spread 114 inside the conical tank segment causes the fluid to rotate and rise within the annular space formed by the conical wall 113 in a conventional manner. The conical tank segment (inlet chamber) with baffle plates 130 in the upper part of the cone and adjacent to the truncated conical shaped tank segment reduces the speed of rotation and convert the helical liquid flow from the lower part of the conical tank segment into laminar and axial flow over the guide vanes, vertical plate channels or perforated plate. The perforated horizontal plate outside the truncated conical shaped tank segment further reduces any unwanted oscillations thereby increasing the process efficiency. Water relieved from gas and oil at the upper end of the conical tank flows 1155 into the space between outer tank and the inner truncated conical shaped tank segment and sinks towards the water outlet 116 at the bottom of the tank 104. Any debris, scale and small particles may be drained off through a separate pipe-connection 108 attached to the bottom of the conical tank segment. The conical shaped area of the inner tank segment will provide an additional pressure drop thereby increasing the release of gas without affecting the upward rotating flow adversely.

In some embodiments, the apparatus 100 further comprises a subsequent conical tank segment as illustrated in Fig.1, wherein the fluid of the second conical tank segment is connected to the water reservoir outlet between the outer tank and the conical tank segment through one or more pipes 116. The subsequent conical tank segment is preferably similar to the conical tank segment discussed previously, but may also have a different design. An ejection pipe for this segment is illustrated in Fig. 1, by arrow 5 and Eject Step 2 in Fig. 8.

The internal pressure in each conical tank segment may be less than the pressure in any previous conical tank segment. This allows for a gradual reduction of pressure, for example to or below atmospheric pressure, and may be useful to ensure efficient flow within each conical tank segment over a large pressure differential from the first inlet to the last outlet. Additional supplies of process gas at each segment may not be required, as more gas is released from the fluid during each pressure drop.

In some embodiments, however, the inlet pipe 111 has a gas inlet for process gas. Additional process gas may be particularly desirable in applications where the pressure difference between the first inlet and the last water outlet is relatively small, i.e. where a large fraction of gas is released in the first tank segment. However, additional process gas may also be supplied to subsequent tank segments for different reasons. This is illustrated by 118 in Fig.1 and Gas Step 2 in Fig.8.

In an embodiment, the channels or pipes are mounted inside the conical tank segment and between the conical tank segment and the outer tank segment 110 120.

This greatly improves the laminar flow control, the capacity per unit volume and, most significantly, the overall efficiency. There are no internal couplings, guide-plates, bolts and nuts and unwanted scales are removed by recognised chemicals. Adequate internal inspection is achieved via manholes 130a. Gas supply, sensors, operating valves etc. are mounted at the inlet and outlet piping from the outer tank segment.

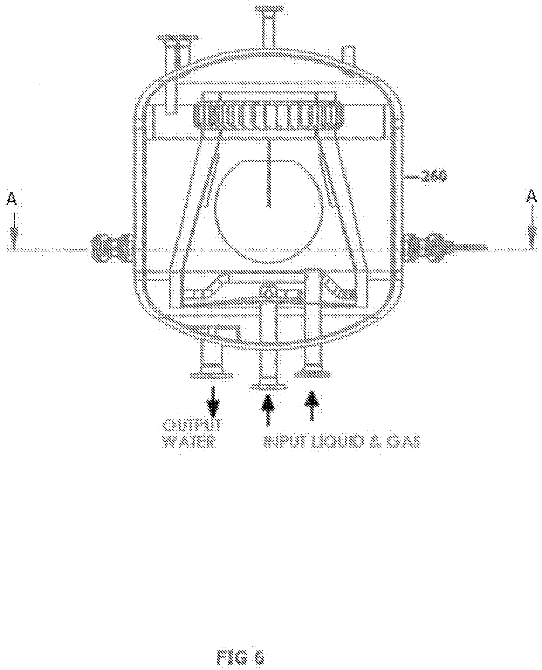

In an embodiment as illustrated in Fig.6, it is provided an one stage unit 260 with one conical tank segment or inlet chamber which has double inlet ports for produced water and gas supplies at the bottom of the tank. The double input ports protruding through the outer tank shell and the lower part of the conical tank segment and where the pipes from the input ports are spread individually into pipe end pieces tangentially adjacent to the inner wall of the cone. By closing and opening of the accesses to the internal conical tank mounted pipe spread 114 the following range of capacities are obtained as a minimum:
a) 15 m3/hr to 150 m3/hr
b) 30 m3/hr to 300 m3/hr
   i.e. Turn down: 10 % of capacity

Preferably, a mixer 109 for mixing the process gas into the fluid is provided upstream from the inlet and preferably a designated mixer as shown on Fig.1, and further illustrated in Fig.9 where the gas fluid mixer 109 is mounted in a housing 119, cf. Section C - C in Fig.1. The mixer ensures that the process gas is evenly distributed in the fluid entering through the inlets, further improving the overall efficiency.

In an embodiment, the fluid inlet comprises a flow regulator. The flow regulator can be of any conventional design, i.e. a rotatable throttle body as in a butterfly valve or a sliding plate for covering or uncovering a slit in the tank wall. The flow regulator adjusts the fluid flow into the apparatus, i.e. by fully closing a fraction of the inlets or by reducing or increasing the aperture through every inlet. In this manner, the apparatus can be adapted to a range of input volume rates, and of course also to varying volume rates. Sensors, controllers, actuators and control algorithms, e.g. feedback to adapt the inlets to a measured flow or feed forward to adapt the inlets in advance to receive a known change, are generally known, and may be adapted to the apparatus of the invention in a conventional manner.

In embodiments with two or more conical tank segments as illustrated in Fig.1 and Fig.8, the hydrocarbon outlets from the different conical tank segments may lead into a separate outlet pipes 3 and 5, prior to entering a common manifold collecting the pipes with the separate oil flows. In this case, reduction valves from each conical tank segment to a common outlet manifold are required. The alternative, each outlet pipe from each conical tank segment, may be preferable in embodiments with other tank segments.

In an embodiment with two or more conical segments the downward flowing liquid - water may enter the following conical segment through a centre mounted vertical pipe, as illustrated in Fig.8, thereby avoiding separate piping arrangements and thereby reducing manufacturing costs and improving flow conditions.

### DESCRIPTION OF PRINCIPLES

Figure 1 illustrates the apparatus 100 according to the invention. The apparatus 100 comprises a cylindrical tank wall 101 closed by a top cap 102 and a bottom cap 103. An input flow of initial fluid 1 contains a mixture of water, hydrocarbons and a process gas 2, i.e. N₂ or CO₂, The process gas is thoroughly mixed with hydrocarbons and water in a mixer 109, and fed into a truncated conical shaped tank segment through a pipe which is split into two or more pipes, i.e. pipe spread, with pipe ends protruding tangentially to the inner wall of the truncated conical shaped tank segment forcing the fluid into an upward rotating laminar flow in a clockwise direction when viewed from above. This is advantageous on the northern hemisphere due to the Coriolis force and hence the natural direction of a vortex north of equator. Accordingly the pipe assembly designed for the southern hemisphere would preferably guide the input fluid in the opposite direction, i.e. counter-clockwise when viewed from above.

In order to control the flow motion into the area adjacent to the vertically adjustable ejection pipe 115, several methods have been developed and tested which is essential for optimum efficiencies at varying conditions of hydrocarbons.

In such an embodiment the truncated conical shaped tank segment comprises a ring of vertically mounted guide vanes 1140 whereas baffle plates are placed on the inner wall of the con below the frustum preferably opposing the direction rotation of the fluid thereby converting the upward motion of the fluid into a combined upward radial and axial laminar flow into the annular space between the tank wall 101, 102 and the guide vanes 1040.

In the inventive embodiment as illustrated in Fig. 2 a perforated plate 1141 is mounted in the annular space between the foot of the guide vanes 1040 and the tank wall 101 or tank cap 102 thereby securing laminar vertical fluid flow along the outer wall of the conical tank segment 113. I.e. ensuring slow vertical flow of water and securing optimum release of gas bubbles with oil films above the perforated plate. A circular plate ring 1143 is mounted on the supporting perforated plate structure with a fixed diameter extending outwards from the truncated conical tank segment 113 to a predetermined distance. The area A1 of the perforated plate structure supporting the plate ring and the area A2 of truncated conical tank segment (frustum) is preferably in the range from 2 to less than 4 in order to reduce unwanted downward flow of water mixed with oil and thereby reducing the efficiency.

In one embodiment with not circular tank sediment the circular perforated plate 1141 will not occupy the complete annular space between the truncated conical tank segment 113 and the tank wall thus preventing optimum ejection of hydrocarbons and gas in certain locations outside the perforated plate with corresponding reduction process efficiency. A vertical plate ring with a fixed diameter is therefore added to the circumference of the perforated plate.

In a further embodiment as illustrated in Fig.3 the guide vanes are replaced by one or more perforated parallel plates covering the truncated conical shaped tank segment and adjacent annular space limited by the tank wall 101 and/or tank wall cap 102. The perforated plate in the area of the truncated conical shaped tank segment is preferably pierced and punched into downward loops designated arresting the rotating fluid motion and converting this to and upward controlled motion into the gas - oil - water separation area.

In a further embodiment as illustrated in Fig.4 the truncated conical shaped tank segment contain two or more vertical open-sided channels formed by plates or stretched metal and with the same purpose as previously mentioned for arresting the rotating motion of the fluid. The perforated plate is maintained in the annular space between the channels and the tank wall 101 and/or tank cap 102 and in some cases including the truncated conical shaped tank segment.

In a further embodiment illustrated in Fig.5, preferably pertaining to large diameters of the tank and/or large processing capacities the ejection pipe protrudes into a syphoning head or number of horizontal pipes at different lengths penetrating into the area where oil and gas are being ejected.

In order to maintain optimum efficiencies at varies oil compositions and flow rates the fluid level above the truncated conical shaped tank segment needs to be controlled by an adjustable up/ down movement of ejector pipe 115, this for preventing gas bubbles carrying oil films and disturbances in the downward fluid flow between the tank wall 101 and the conical tank segment.

Fig. 2 is a view over the section along the plane A- A in figure 1, and illustrates the position of the guide vanes 1140 at the truncated conical shaped tank segment exit.

Fig.7A and Fig 7B illustrate the initial fluid flow from mixer 109 into the tangentially directions of the pipe spread along the inner conical tank wall towards the frustum for several stage processes or for a single stage process maintaining an adequate pressure differential of, say, 0.3 bar.

As shown by arrows in figure 1, during operation the input fluid rises along the inner conical tank wall 113 toward guide vanes 1140, which extends axially towards the top cap 102, in general above the tank segment 101. Due to the pressure drop over the inlet pipe 111 and upwards along the conical tank wall 113 and over the vertical guide vanes 1140, process gas and gaseous hydrocarbons form bubbles as the fluid rises into the space between the truncated conical shaped tank segment and the tank cap 102. Baffle plates are placed in the upper part of the conical tank segment and close to the frustum in order to arrest the swirling motion of the fluid.

The main release of gas bubbles occurs in the vortex formed in the cone segment space framed by the wall 113.

Oil droplets attach to the bubbles formed by process gas in the annular space above the pipe spread 114 of the first stage of the upper tank segment 110, and leave the first stage through a first hydrocarbon outlet 115 at the top cap 102. Arrow 2 indicates the input flow of process gas being mixed with produced fluid 1 in the first stage or tank segment 110. In the second stage illustrated by tank segment 120 process gas inlet is represented by arrow 6 and reject of hydrocarbon gas and the gas is represented by arrow 5.

The vortex set up in the conical tank segment 113 formed by its inner wall aids separation. In particular, the density of the fluid after passing through the fluid controlling devices mounted at the truncated conical shaped tank segment increases as process gas and hydrocarbons are removed. The denser fluid relieved from gas and hydrocarbons move radially outwards from the truncated conical shaped tank segment as it descends in a laminar manner, in an embodiment through a perforated plate.The wide area between the flow outlets from the truncated conical shaped tank segment and the tank wall results in negligible fluid disturbance and thereby enhances further separation of gas and oil droplets. At equilibrium, the densest fluid, i.e. the cleanest water, collects at the bottom of the tank segment 110. Hence, a water outlet 116 pipe is provided through a disc separating the following stage 120 from the previous stage 110.

No deflectors or guide plates are required in the area between the outside of the conical tank segment and the tank wall 101 or at the fluid inlets to the conical tank segments.

The downward flow illustrated by 1155 enters the pipe inlet 116 above the bottom plate 104 of tank segment 110 and into pipe 121 thereby connecting the first stage tank segment 110 to the second stage tank segment 120. The inlet 121 is similar to the inlet 111, with the pipe spread inside the conical tank segments identical to the previous description.

In particular, the second tank segment 120, and in general any subsequent tank segments are preferably designed in a similar manner. Thus, any subsequent segment 120 can be connected in series to a previous tank segment 110, 120 by outlets 116 and piping arrangement 121.

The manholes 130a facilitate maintenance and inspection. Further, gas inlet 118 for an additional supply of process gas 6, valves and other equipment not shown are readily available on external piping from tank segments 101 and tank caps 102 and 103.

Each tank segment 110, 120 etc. has a separate hydrocarbon outlets i.e. 115, 140 etc. The outlet from pipe 140 illustrated by arrow 5 is a flow of process gas and hydrocarbons similar to the flow from outlet 115 shown by arrow 3. If desired, the outlet 115 from the first tank segment 110 can also be an inlet to pipe 140.

The water outlet 126 from the last tank segment is provided at the bottom of tank segment 120, and the last tank segment 120 is provided with a conventional vortex breaker in the form of a horizontal disc 150. The water outlet 126 might alternatively be openings through the outer tank wall 101.

Tests have shown that the efficacy is greatly improved by limiting or cancelling the oscillation of the radial flow outside the truncated conical shaped tank segment as previously described. As a result, typically more than 95 % of the hydrocarbon contained in the initial fluid leaves the separator through the first hydrocarbon outlet 115 together with process gas. In turn, this reduces the need for subsequent segments, e.g. to one subsequent tank segment 120 as shown in Figure 1 or one stage illustrated by Figure 6, whereas a typical prior art separator tank would require three or four tank segments to achieve a low content of hydrocarbons in the final water flow 4.

In accordance with common practice, the articles 'a', 'an' and 'the' when used in the descriptions mean 'at least one', whereas 'one' means exactly one. Thus, 'an inlet' stated in the description should be construed as 'at least one inlet'. Similarly, the descriptions imply at least one input flow 1, at least one mixer 109 etc.

Figure 9 is a vertical cross section along C -C of a gas fluid mixer 109 as previously described.

The vertically mounted tube 1150 constitute part of the support structure for the horizontal plate 104 dividing the tank segments 110 and 120, the conical tank segments and the vortex plate 150 above the water outlet at the bottom of the tank segment 120. Other designs; i.e. piping arrangements are anticipated and within the scope of the invention.

Figure 6 illustrates a single stage process having one truncated conical shaped tank segment with double input ports/pipes for mixtures of liquids and gas. Each of these pipes is connected individually to a spread of two or more horizontal pipes with end pieces tangentially adjacent to the inner wall of the cone.

Further to the above Figure 6, Figure 7B Section A -A illustrates the direction of flow from two or more horizontal pipes, each individually connected to the two input ports/pipes. Each input port may be operated separately in order to obtain a wide capacity range by a single stage process.

An axially movable plate represents a general flow regulator, controlling the input to the associated tank segment 110, 120. The flow regulator can be of any conventional design, e.g. a rotatable throttle body such a butterfly valve within an external pipe or a sliding plate for covering or uncovering a slit in the tank wall. Either way, the flow regulator adjusts the fluid flow into the apparatus, e.g. by fully closing a fraction of the inlets or by reducing or increasing the aperture through every inlet. In this manner, the apparatus 100 can be adapted to a range of input volume rates, and of course also to varying volume rates. Sensors, controllers, actuators and control algorithms, e.g. feedback to adapt the inlets to a measured flow or feed forward to adapt the inlets in advance to receive a known change, are generally known, and may be adapted to the apparatus of the invention in a conventional manner.

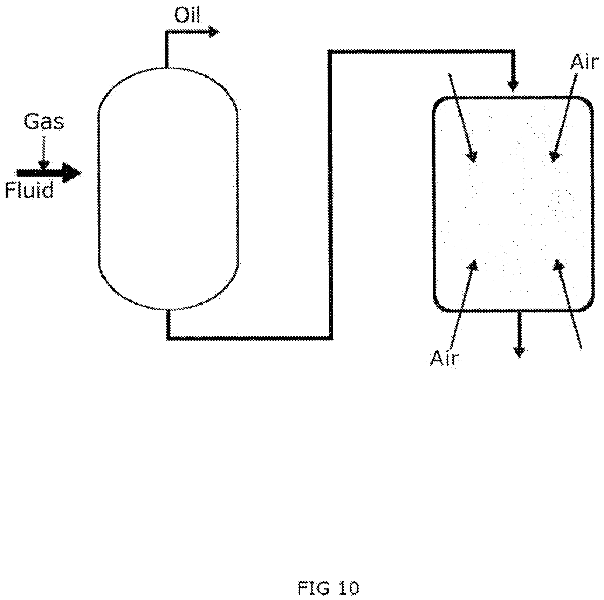

The previously described processes may be connected in series with one or more known bio-remediation processes in order to approach 100 % process efficiency. This system comprises an apparatus 100, where at certain conditions and with cleaning efficiencies above 99 % of said apparatus, the apparatus is connected to a bio-remediation process located downstream, in order to convert the remaining ppm of oil into water and CO₂. Fig. 10 illustrates the principal of known technology such as bio-remediation by creating film of oil eating bacteria on packing of particles or tiny balls by adding a steady stream of oxygen to the fluid flowing into a separate tank segment connected in series with the previous described cleaning processes thereby converting hydrocarbons into CO₂ and water.

While the invention has been described with reference to specific examples and embodiments, the scope of the invention is determined by the accompanying claims.

## Claims

1. An apparatus (100) for separating hydrocarbons from water including
a tank segment (110), **characterized in** comprising;
a fluid inlet pipe (111) through a cylindrical tank wall (101), subsequent a gas mixer (109) including a fluid inlet (1) and additional gas supply (2), the fluid inlet pipe (111) subsequently entering;
a truncated conical shaped tank segment (113) located inside the tank segment (110), comprising;
a pipe spread (114), securing tangentially distribution of the fluid along the inner wall of the conical tank segment (113) towards the upper part of the conical tank segment (113), wherein
ring mounted spaced guide vanes (1140) are arranged at the upper part of the conical tank segment (113), arresting the swirling motion of the fluid and combining the remaining motion into axial and radial motion into the space between the vanes, and
a perforated plate (1141) is mounted in the annular space between the foot of the guide vanes (1040) and the tank wall (101) thereby securing laminar vertical fluid flow along the outer wall of the conical tank segment (113), and
a hydro carbon outlet (115) at a tank cap (102) at the upper part of the tank wall (101), and
a safety valve and level indicator at the tank cap (102) and
a pipe for scale and debris removal (108) connected to the lower part of the cone segment (113), and
a water outlet (116) at a bottom end of the tank segment (110).

2. The apparatus (100) according to claim 1, **characterized in** further comprising a subsequent tank segment (120), wherein
a fluid inlet pipe (121) of the second tank segment (120) is connected to the downward flowing water outlet (116) of the previous tank segment (110), through a vortex plated exit connected to pipe (121), and into a truncated conical wall segment (113) located inside the lower tank segment (120), and wherein
pipe (121) is subjected to additional gas (6) through a gas inlet pipe (118), and pipe (121) is lead to a pipe spread (114) analogous as in tank segment (110), and where the second tank segment (120) comprises
a hydrocarbon outlet (140) at the upper part and a water outlet (126) at the bottom at a tank cap (103).

3. The apparatus (100) according to any previous claim, **characterized in that** no guide plates are required at the fluid inlets in order to set the fluid into an upward rotating motion in the conical shaped tank segments (113).

4. The apparatus (100) according to any previous claim **characterized in that** the outlets from tangentially mounted pipe spread (114) along the inner wall of the cone segment (113) secure an upward rotating fluid motion towards the upper part of the truncated conical wall segment (113).

5. The apparatus (100) according to any previous claim **characterized in that** the cone angle is less than 90 degrees to the vertical and secures rotating laminar upward flow of the fluid when entering the inner area of the ring mounted spaced guide vanes (1140).

6. The apparatus (100) according to any previous claim **characterized in that** the conical segments (113) have internal vertical baffle plates (130) at the upper part of the truncated conical tank segment (113), thereby interrupting and reducing the rotation of the fluid.

7. The apparatus (100) according to any previous claim **characterized in that** the perforated plate (1140a) in the area of the cross section of the truncated conical tank segment (113) is pierced and punched into downward loops thereby arresting the rotating fluid motion and converting this into an upward controlled motion into the gas - oil - water separation area.

8. The apparatus (100) according to any previous claim **characterized in that** at the hydrocarbon outlet (115) ejection pipe mouth protrudes into several ejection pipes (115a) of different lengths thereby catching released oil and gas before the downward flow through the perforated plate occurs.

9. The apparatus (100) according to any previous claim **characterized in that** hydrocarbon outlet (115) ejection pipe is controlled by adjustable vertical movement in order to maintain maximum efficiencies at various oil compositions, oil droplets and flow rates the fluid level above the truncated conical tank segment (113).

10. The apparatus (100) according to any previous claim **characterized in that** the position of the hydrocarbon outlet (115) ejection pipe is along the vertical centre line of the tank segment (110) when the truncated conical tank segment (113) and adjacent area is covered by perforated plate(s).

11. The apparatus (100) according to any claim 1-12 **characterized in that** the position of the hydrocarbon outlet (115) ejection pipe is offset the vertical centre line of the tank segment (110).

12. The apparatus (100) according to claim 1 and 2 **characterized in that** the pipe (121) has a subsequent gas inlet (118) for process gas (6).

13. The apparatus (100) according to any previous claim **characterized in,** further comprising a mixer (109) mounted in a housing (119), mixing the process gas into the fluid upstream from the inlet (111, 121).

14. The apparatus (100) according to any previous claim, wherein the fluid inlet (111, 121) comprises a flow regulator.

15. The apparatus (100, 300) according to any previous claim, wherein the hydrocarbon outlets (115, 140) from the subsequent tank segments (110, 120) lead into a common pipe line.

16. The apparatus (100) according to any previous claim comprising an outer tank shell (260) with an inner conical segment (113), with double inlet ports/pipes and gas mixers at the bottom of the outer tank shell, and the pipes protrudes into the lower inner part of the conical segment and are each spread into a total two, four or multiple horizontal pipe-segments each extending into end pieces tangentially adjacent to the inner wall of the conical bowl all producing tangential flow.

17. The apparatus (100, 300) according to any of claim 1 or 2 comprising a tank segment with fluid inlet including a gas mixer, the fluid inlet through the cylindrical tank wall and through a symmetrical downward sloping bottom plate of the conical segment (113) and into pipe spread situated above and close to the bottom of the conical segment, and the liquid flows from the first stage segment passes an entrance of a centre mounted vertical pipe protruding into the following pipe spread.

18. The apparatus (100) according to any previous claim **characterized in that** solids are removed from the lowest section of the conical tank segment (113) and through exit pipes (108).

19. The apparatus (100) according to claim 1 and 2 **characterized in that** the bottom of the conical tank segment (113) is horizontal or inverted, elevates the cone above the lower tank segment thereby reducing the overall height of the apparatus.

20. The apparatus (100) according to any previous claim **characterized in that** at the circumference of tank segment (101) a circular plate ring (1143) is mounted on a supporting perforated plate structure with a fixed diameter extending outwards from the truncated conical tank segment (113) to a predetermined distance where the area (A1) of the perforated plate structure supporting the plate ring and the area (A2) of truncated conical tank segment (frustum) is preferably in the range from 2 to less than 4 in order to reduce unwanted downward flow of water mixed with oil and thereby reducing the efficiency.

21. The apparatus (100) according to any previous claim **characterized in** being connected to a known bio-remediation process located downstream, in order to convert the remaining ppm of oil into water and

## Patentansprüche

1. Vorrichtung (100) zum Abscheiden von Kohlenwasserstoffen aus Wasser, die einen Tankabschnitt (110) einschließt, **dadurch gekennzeichnet, dass** sie Folgendes umfasst:
ein Fluideinlassrohr (111) durch eine zylindrische Tankwand (101), im Anschluss an einen Gasmischer (109), der einen Fluideinlass (1) und eine zusätzliche Gaszuleitung (2) einschließt, wobei das Fluideinlassrohr (111) anschließend eintritt in:
einen innerhalb des Tankabschnitts (110) angeordneten kegelstumpfförmigen konischen Tankabschnitt (113), umfassend:
einen Rohrspreizer (114), der eine tangentiale Verteilung des Fluids entlang der Innenwand des konischen Tankabschnitts (113) in Richtung des oberen Teils des konischen Tankabschnitts (113) sicherstellt, wobei
ringförmig montierte, beabstandete Leitflügel (1140) am oberen Teil des konischen Tankabschnitts (113) angeordnet sind, die die Wirbelbewegung des Fluids bremsen und die verbleibende Bewegung in axiale und radiale Bewegung in den Raum zwischen den Flügeln kombinieren, und
wobei eine Lochplatte (1141) in dem ringförmigen Raum zwischen dem Fuß der Leitfügel (1040) und der Tankwand (101) angebracht ist, wodurch ein laminarer vertikaler Fluidfluss entlang der Außenwand des konischen Tankabschnitts (113) sichergestellt ist, und
einen Kohlenwasserstoffauslass (115) an einem Tankdeckel (102) am oberen Teil der Tankwand (101) und
ein Sicherheitsventil und eine Füllstandsanzeige am Tankdeckel (102) und ein Rohr zur Kesselstein- und Ablagerungsentfernung (108), das mit dem unteren Teil des Kegelabschnitts (113) verbunden ist, und
einen Wasserauslass (116) am Boden des Tankabschnitts (110).

2. Vorrichtung (100) nach Anspruch 1, **dadurch gekennzeichnet, dass** sie ferner einen anschließenden Tankabschnitt (120) umfasst, wobei
ein Fluideinlassrohr (121) des zweiten Tankabschnitts (120) mit dem nach unten fließenden Wasserauslass (116) des vorhergehenden Tankabschnitts (110) durch einen mit Rohr (121) verbundenen Verwirbelungsausgang und in einen kegelstumpfförmigen, konischen Wandabschnitt (113), der innerhalb des unteren Tankabschnitts (120) angeordnet ist, verbunden ist, und wobei
das Rohr (121) durch ein Gaseinlassrohr (118) zusätzlichem Gas (6) ausgesetzt ist, und Rohr (121) zu einer Rohrspreizung (114) analog zu einem Tankabschnitt (110) geleitet wird, und wobei der zweite Tankabschnitt (120) einen Kohlenwasserstoffauslass (140) am oberen Teil und einen Wasserauslass (126) am Boden an einem Tankdeckel (103) umfasst.

3. Vorrichtung (100) nach einem der vorangehenden Ansprüche, **dadurch gekennzeichnet, dass** an den Flüssigkeitseinlässen keine Leitplatten erforderlich sind, um die Flüssigkeit in den konisch geformten Tankabschnitten (113) in eine rotierende Aufwärtsbewegung zu versetzen.

4. Vorrichtung (100) nach einem der vorangehenden Ansprüche, **dadurch gekennzeichnet, dass** die Auslässe aus tangential angebrachten Rohren (114), die entlang der Innenwand des konischen Abschnitts (113) verteilt sind, eine rotierende Aufwärtsbluidbewegung in Richtung des oberen Teils des kegelstumpfförmigen Wandabschnitts (113) sicherstellen.

5. Vorrichtung (100) nach einem der vorangehenden Ansprüche, **dadurch gekennzeichnet, dass** der Konuswinkel weniger als 90 Grad zur Vertikalen beträgt und einen rotierenden laminaren Aufwärtsfluss des Fluids beim Eintritt in den inneren Bereich der ringförmig montierten, beabstandeten Leitlügel (1140) sicherstellt.

6. Vorrichtung (100) nach einem der vorangehenden Ansprüche, **dadurch gekennzeichnet, dass** die konischen Abschnitte (113) innere vertikale Ablenkplatten (130) am oberen Teil des kegelstumpfförmigen konischen Tankabschnitts (113) aufweisen, wodurch die Rotation des Fluids unterbrochen und verringert wird.

7. Vorrichtung (100) nach einem der vorangehenden Ansprüche, **dadurch gekennzeichnet, dass** die Lochplatte (1140a) im Bereich des Querschnitts des kegelstumpfförmigen konischen Tankabschnitts (113) durchbohrt und zu Abwärtsschlaufen gestanzt ist, wodurch die rotierende Fluidbewegung gebremst und diese in eine kontrollierte Aufwärtsbewegung in den Gas-Öl-Wasser-Trennbereich umgewandelt wird.

8. Vorrichtung (100) nach einem der vorangehenden Ansprüche, **dadurch gekennzeichnet, dass** am Kohlenwasserstoffauslass (115) eine Ausstoßrohrmündung in mehrere Ausstoßrohre (115a) unterschiedlicher Länge hineinragt, wodurch freigesetztes Öl und Gas aufgefangen werden, bevor der Abwärtsfluss durch die Lochplatte stattfindet.

9. Vorrichtung (100) nach einem der vorangehenden Ansprüche, **dadurch gekennzeichnet, dass** das Kohlenwasserstoffauslass (115)-Ausstoßrohr durch eine einstellbare vertikale Bewegung gesteuert wird, um maximale Wirkungsgrade bei verschiedenen Ölzusammensetzungen, Öltröpfchen und Durchflussgeschwindigkeiten des Flüssigkeitsniveaus über dem kegelstumpfförmigen konischen Tankabschnitt (113) aufrechtzuerhalten.

10. Vorrichtung (100) nach Anspruch 1, **dadurch gekennzeichnet, dass** die Position des Kohlenwasserstoff-Auslassrohrs (115) entlang der vertikalen Mittellinie des Tankabschnitts (110) liegt, wenn der kegelstumpfförmige konische Tankabschnitt (113) und der angrenzende Bereich durch Lochplatte(n) abgedeckt sind.

11. Vorrichtung (100) nach einem der Ansprüche 1-12, **dadurch gekennzeichnet, dass** die Position des Kohlenwasserstoffauslass (115)-Ausstoßrohrs entlang der vertikalen Mittellinie des Tankabschnitts (110) versetzt ist.

12. Vorrichtung (100) nach Anspruch 1 und 2, **dadurch gekennzeichnet, dass** das Rohr (121) einen anschließenden Gaseinlass (118) für Prozessgas (6) aufweist.

13. Vorrichtung (100) nach einem der vorangehenden Ansprüche, **dadurch gekennzeichnet, dass** sie ferner einen in einem Gehäuse (119) angebrachten Mischer (109) umfasst, der das Prozessgas stromaufwärts des Einlasses (111, 121) in das Fluid mischt.

14. Vorrichtung (100) nach einem der vorangehenden Ansprüche, wobei der Fluideinlass (111, 121) einen Durchflussregler umfasst.

15. Vorrichtung (100, 300) nach einem der vorangehenden Ansprüche, wobei die Kohlenwasserstoffauslässe (115, 140) aus den nachfolgenden Tankabschnitten (110, 120) in eine gemeinsame Rohrleitung führen.

16. Vorrichtung (100) nach einem der vorangehenden Ansprüche, umfassend einen äußeren Tankmantel (260) mit einem inneren konischen Abschnitt (113), mit doppelten Einlassöffnungen/-rohren und Gasmischern am Boden des äußeren Tankmantels, wobei die Rohre in den unteren inneren Teil des konischen Abschnitts hineinragen und jeweils in insgesamt zwei, vier oder mehrere horizontale Rohrabschnitte aufgeteilt sind, die sich jeweils in Endstücke tangential im Anschluss an die Innenwand des konischen Kessels erstrecken und alle einen tangentialen Fluss erzeugen.

17. Vorrichtung (100, 300) nach einem der Ansprüche 1 oder 2, umfassend einen Tankabschnitt mit Fluideinlass einschließlich eines Gasmischers, wobei der Fluideinlass durch die zylindrische Tankwand und durch eine symmetrische, nach unten geneigte Bodenplatte des konischen Abschnitts (113) und in eine Rohrspreizung erfolgt, die sich oberhalb und nahe am Boden des konischen Abschnitts befindet, und die Flüssigkeit aus dem ersten Stufenabschnitt durch einen Eingang eines mittig montierten vertikalen Rohrs fließt, das in die folgende Rohrspreizung hineinragt.

18. Vorrichtung (100) nach einem der vorangehenden Ansprüche, **dadurch gekennzeichnet, dass** Feststoffe aus dem untersten Abschnitt des konischen Tankabschnitts (113) und durch Austrittsrohre (108) entfernt werden.

19. Vorrichtung (100) nach den Ansprüchen 1 und 2, **dadurch gekennzeichnet, dass** der Boden des konischen Tankabschnitts (113) horizontal oder invertiert ist, was den Konus über den unteren Tankabschnitt anhebt und dadurch die Gesamthöhe der Vorrichtung verringert.

20. Vorrichtung (100) nach einem der vorangehenden Ansprüche, **dadurch gekennzeichnet, dass** am Umfang des Tankabschnitts (101) ein kreisförmiger Plattenring (1143) auf einer tragenden Lochplattenstruktur mit einem festen Durchmesser montiert ist, der sich von dem kegelstumpfförmigen konischen Tankabschnitt (113) bis zu einem vorbestimmten Abstand nach außen erstreckt, wo der Bereich (A1) der Lochplattenstruktur, der den Plattenring trägt, und der Bereich (A2) des kegelstumpfförmigen konischen Tankabschnitts (Kegelstumpf) vorzugsweise im Bereich von 2 bis weniger als 4 liegt, um den unerwünschten Abwärtsfluss von mit Öl vermischtem Wasser zu verringern und dadurch den Wirkungsgrad zu reduzieren.

21. Vorrichtung (100) nach einem der vorangehenden Ansprüche, **dadurch gekennzeichnet, dass** sie an einen bekannten nachgeschalteten Biosanierungsprozess angeschlossen ist, um die verbleibenden ppm an Öl in Wasser und CO₂ umzuwandeln.

## Revendications

1. Appareil (100) pour séparer des hydrocarbures à partir d'eau comprenant un segment de réservoir (110), **caractérisé en ce qu'**il comprend ;
un tuyau d'entrée de fluide (111) à travers une paroi de réservoir cylindrique (101), après un mélangeur de gaz (109) comprenant une entrée de fluide (1) et une alimentation en gaz supplémentaire (2), le tuyau d'entrée de fluide (111) pénétrant par la suite dans ;
un segment de réservoir de forme tronconique (113) situé à l'intérieur du segment de réservoir (110), comprenant ;
une extension de tuyau (114), assurant une distribution tangentielle du fluide le long de la paroi intérieure du segment de réservoir conique (113) vers la partie supérieure du segment de réservoir conique (113), dans lequel
des aubes de guidage espacées montées en anneau (1140) sont disposées au niveau de la partie supérieure du segment de réservoir conique (113), arrêtant le mouvement tourbillonnant du fluide et combinant le mouvement restant en mouvement axial et radial dans l'espace entre les aubes, et
une plaque perforée (1141) est montée dans l'espace annulaire entre le pied des aubes de guidage (1040) et la paroi de réservoir (101) assurant ainsi un écoulement de fluide vertical laminaire le long de la paroi extérieure du segment de réservoir conique (113), et
une sortie d'hydrocarbures (115) au niveau d'un bouchon de réservoir (102) au niveau de la partie supérieure de la paroi de réservoir (101), et
une soupape de sécurité et un indicateur de niveau au niveau du bouchon de réservoir (102), et
un tuyau pour une élimination de tartre et de débris (108) relié à la partie inférieure du segment conique (113), et
une sortie d'eau (116) au niveau d'une extrémité inférieure du segment de réservoir (110).

2. Appareil (100) selon la revendication 1, **caractérisé en ce qu'**il comprend en outre un segment de réservoir ultérieur (120), dans lequel
un tuyau d'entrée de fluide (121) du second segment de réservoir (120) est relié à la sortie d'eau s'écoulant vers le bas (116) du segment de réservoir précédent (110), à travers une sortie à plaque de vortex reliée au tuyau (121), et dans un segment de paroi tronconique (113) situé à l'intérieur du segment de réservoir inférieur (120), et dans lequel
le tuyau (121) est soumis à un gaz supplémentaire (6) à travers un tuyau d'entrée de gaz (118), et le tuyau (121) aboutit à une extension de tuyau (114) analogue à celui du segment de réservoir (110), et où le second segment de réservoir (120) comprend une sortie d'hydrocarbures (140) au niveau de la partie supérieure et une sortie d'eau (126) au fond au niveau d'un bouchon de réservoir (103).

3. Appareil (100) selon l'une quelconque des revendications précédentes, **caractérisé en ce qu'**aucune plaque de guidage n'est requise au niveau des entrées de fluide afin d'établir le fluide dans un mouvement de rotation vers le haut dans les segments de réservoir de forme conique (113).

4. Appareil (100) selon l'une quelconque des revendications précédentes, **caractérisé en ce que** les sorties de l'extension de tuyau montée tangentiellement (114) le long de la paroi intérieure du segment conique (113) assurent un mouvement de fluide rotatif ascendant en direction de la partie supérieure du segment de paroi tronconique (113).

5. Appareil (100) selon l'une quelconque des revendications précédentes **caractérisé en ce que** l'angle de cône est inférieur à 90 degrés par rapport à la verticale et assure un écoulement laminaire rotatif ascendant du fluide lorsqu'il pénètre dans la zone intérieure des aubes de guidage espacées montées en anneau (1140).

6. Appareil (100) selon l'une quelconque des revendications précédentes, **caractérisé en ce que** les segments coniques (113) comportent des déflecteurs verticaux internes (130) au niveau de la partie supérieure du segment de réservoir tronconique (113), en interrompant et réduisant ainsi la rotation du fluide.

7. Appareil (100) selon l'une quelconque des revendications précédentes, **caractérisé en ce que** la plaque perforée (1140a) dans la zone de la coupe transversale du segment de réservoir tronconique (113) est percée et poinçonnée dans des boucles vers le bas arrêtant ainsi le mouvement de fluide rotatif et convertissant celui-ci en un mouvement commandé ascendant dans la zone de séparation gaz-huile-eau.

8. Appareil (100) selon l'une quelconque des revendications précédentes **caractérisé en ce qu'**au niveau de la sortie d'hydrocarbures (115), une embouchure de tuyau d'éjection fait saillie dans plusieurs tuyaux d'éjection (115a) de différentes longueurs capturant ainsi de l'huile et du gaz libérés avant que l'écoulement descendant à travers la plaque perforée ne se produise.

9. Appareil (100) selon l'une quelconque des revendications précédentes **caractérisé en ce que** le tuyau d'éjection de sortie d'hydrocarbures (115) est commandé par un mouvement vertical ajustable, afin de maintenir des efficacités maximales à diverses compositions d'huile, gouttelettes et débits d'huile, du niveau de fluide au-dessus du segment de réservoir tronconique (113).

10. Appareil (100) selon l'une quelconque des revendications précédentes **caractérisé en ce que** la position du tuyau d'éjection de sortie d'hydrocarbures (115) est le long de la ligne médiane verticale du segment de réservoir (110) lorsque le segment de réservoir tronconique (113) et une zone adjacente sont couverts par une ou des plaque(s) perforée(s).

11. Appareil (100) selon l'une quelconque des revendications 1 à 12, **caractérisé en ce que** la position du tuyau d'éjection de sortie d'hydrocarbures (115) est décalée de la ligne médiane verticale du segment de réservoir (110).

12. Appareil (100) selon les revendications 1 et 2 **caractérisé en ce que** le tuyau (121) présente une entrée de gaz ultérieure (118) pour un gaz de traitement (6).

13. Appareil (100) selon l'une quelconque des revendications précédentes **caractérisé en ce qu'**il comprend en outre un mélangeur (109) monté dans un boîtier (119), mélangeant le gaz de traitement dans le fluide en amont de l'entrée (111, 121).

14. Appareil (100) selon l'une quelconque des revendications précédentes, dans lequel l'entrée de fluide (111, 121) comprend un régulateur de débit.

15. Appareil (100, 300) selon l'une quelconque des revendications précédentes, dans lequel les sorties d'hydrocarbures (115, 140) des segments de réservoir ultérieurs (110, 120) aboutissent dans une canalisation commune.

16. Appareil (100) selon l'une quelconque des revendications précédentes comprenant une coque extérieure de réservoir (260) avec un segment conique intérieur (113), avec des orifices/tuyaux d'entrée doubles et des mélangeurs de gaz au fond de la coque extérieure de réservoir, et les tuyaux font saillie dans la partie intérieure inférieure du segment conique et sont chacun répartis en un total de deux, quatre ou multiples segments de tuyau horizontaux s'étendant chacun dans des pièces d'extrémité tangentiellement adjacentes à la paroi intérieure du bol conique, produisant tous un écoulement tangentiel.

17. Appareil (100, 300) selon l'une quelconque des revendications 1 ou 2 comprenant un segment de réservoir avec une entrée de fluide comprenant un mélangeur de gaz, l'entrée de fluide à travers la paroi de réservoir cylindrique et à travers une plaque de fond symétrique inclinée vers le bas du segment conique (113) et dans une extension de tuyau située au-dessus et à proximité du fond du segment conique, et les écoulements liquides à partir du premier segment d'étage passent par une entrée d'un tuyau vertical monté au centre faisant saillie dans l'extension de tuyau suivante.

18. Appareil (100) selon l'une quelconque des revendications précédentes, **caractérisé en ce que** des solides sont retirés de la section la plus basse du segment de réservoir conique (113) et à travers des tuyaux de sortie (108).

19. Appareil (100) selon les revendications 1 et 2, **caractérisé en ce que** le fond du segment de réservoir conique (113) est horizontal ou inversé, soulève le cône au-dessus du segment de réservoir inférieur, réduisant ainsi la hauteur totale de l'appareil.

20. Appareil (100) selon l'une quelconque des revendications précédentes, **caractérisé en ce qu'**au niveau de la circonférence du segment de réservoir (101), un anneau de plaque circulaire (1143) est monté sur une structure de plaque perforée de support ayant un diamètre fixe s'étendant vers l'extérieur à partir du segment de réservoir tronconique (113) jusqu'à une distance prédéterminée où la zone (A1) de la structure de plaque perforée supportant l'anneau de plaque et la zone (A2) du segment de réservoir tronconique (tronc) est de préférence dans la plage de 2 à moins de 4 afin de réduire un écoulement descendant indésirable de l'eau mélangée à de l'huile et ainsi réduire l'efficacité.

21. Appareil (100) selon l'une quelconque des revendications précédentes **caractérisé en ce qu'**il est relié à un processus de biorestauration connu situé en aval, afin de convertir les ppm restantes d'huile en eau et
